# EUROPEAN PATENT APPLICATION

(11) **EP 4 776 463 A1**
(43) Date of publication of application: **15.07.2026**
(21) Application number: 25151543.3
(22) Date of filing: 13.01.2025
(51) Int. Cl.: H02J 7/00

(54) **PROTECTION ARRANGMENT, ENERGY STORAGE DEVICE AND APPARATUS COMPRISING SAME**

(71) Applicant: Airbus S.A.S., 31700 Blagnac (FR)
(72) Inventor: Friedl, Stephan, 85521 Taufkirchen (DE)
(74) Representative: OTN Airbus SAS

(57) **Abstract**

A protection arrangement (10), an energy storage device (2), in particular an electrochemical battery for an apparatus (1), and an apparatus (1), in particular, a vehicle, such as an aircraft, are provided, wherein for protecting the energy storage device (2), such as an electrochemical battery in the event of a technical failure (F) of at least one energy storage unit (20) of the energy storage device (2), the protecting arrangement (10) comprises a discharging circuit (13) with a switching device (15) configured to reduce an electrical charging level of the at least one energy storage unit (20) by electrically closing the discharging circuit (13) upon detection of the technical failure (F).

## Description

### Technical Field

The present disclosure relates to the field of protecting energy storage devices in the event of technical failures, such as thermal runaway reactions. In particular, the disclosure relates to a protection arrangement for protecting an energy storage device, such as an electrochemical battery in an apparatus, in particular a vehicle, such as an aircraft, in the event of a technical failure, to an energy storage device, in particular an electrochemical battery for an apparatus, such as an aircraft, and to an apparatus, in particular a vehicle, such as an aircraft.

### Technical Background

Vehicles, including aircrafts, have been using energy storage devices, such as electrochemical batteries, for a long time to store energy. Electrochemical batteries are commonly used as backups or for bridging certain energy needs for vehicles that would normally generate electrical energy through generators driven by combustion engines, for example, for powering electronics and/or auxiliary devices. Nowadays, electrochemical batteries are increasingly used for storing high amounts for of electric energy used for driving the vehicles themselves, and/or to buffer electric energy in vehicles having alternative or hybrid energy conversion systems, such as fuel cells.

Therefore, the energetic capacity and density of energy storage devices, in particular electrochemical batteries, is continuously increasing. In the event of electrical and/or mechanical failures of the energy storage devices, their high capacity can lead to thermal runaway events during which certain exhausts containing chemical decomposition and and/or combustion products of components of the energy storage devices may be produced which can have harmful effects due to their high temperature, pressure and possibly toxicity.

Furthermore, it is to be considered that there are different types of battery cells, for example currently predominantly Li-lon cells with differences in terms of geometries, sizes, housing materials, electrical energy capacity, power rating and most of interest in their chemistry. Unfortunately, cell chemistries with relatively high energy densities are more critical in case of abusive failure conditions that chemistries with lower chemistries. In the event of a thermal runaway (TR), underlying chemical reactions are more critical on electrically fully charged cells as compared with identical cells on a low state of charge.

In particular aircraft safety regulations are requesting qualification tests of batteries showing a large number of cells (or all cells of a battery), fully charged, in TR conditions. To avoid explosion or rupture of the battery housing due to overpressure applied by TR vent gas generation, such battery packs are equipped with an overpressure release opening. If multiple batteries are installed inside the aircraft skin, a manifold and exhaust system needs to be installed.

In particular Li-lon cells may eject hot gas and glowing particles during TR. The solid ejecta can cause several difficulties like conductive surface contamination (arcing), transport of thermal energy due to the thermal capacity of the material, emission of glowing particles out of the battery compartment, ignition of burnable vent gas by sparks in front of the vent gas release opening. For mitigating gas ignition, particle filters, like metallic screens can be used to restrain particle flow. Nevertheless, the functionality of such screens, manifolds and exhaust systems is limited to some cells in TR. During complete TR events inside a battery, a huge amount of hot gas and particles will be emitted. The particles can block the filter or the venting system and cause a major safety impact, the battery housing can explode because of overpressure.

Battery pack designs according to the prior art are commonly following a TR propagation avoidance strategy. For example, thermal barriers are used to avoid the propagation of heat to neighbouring cells to limit the TR event. Housing and venting design is based on the assumption that just one or some cells will change in TR conditions. Such designs may not be compliant with aircraft needs because of the full TR requirement. Therefore, known prior art deals with certain ways to detect or react to defects in energy storage devices, in particular in connection with energy storage devices in aircrafts.

US 2023 198249 A1, for example, describes a circuit breaker with pre-charging and current limiting functions, wherein the circuit breaker is configured for being provided in a power line connecting an electrical energy source and an electric network. The circuit breaker includes a short circuit protection unit including a first semiconductor switch, a precharge unit connected in parallel to the short circuit protection unit and including a second semiconductor switch, and a current limit unit connected in parallel to the short circuit protection unit and to the precharge unit, the current limit unit including a third semiconductor switch.

EP 4 270 707 B1 relates to an electrical energy storage system for an aircraft, comprising at least one electrical energy storage unit with power supply lines and an energy source that is configured to store electrical energy and to supply electrical power at a predetermined voltage range via the power supply lines, wherein the at least one electrical energy storage unit comprises a power switching unit that is adapted to operate in an associated supply mode for supplying electrical power from the energy source via the power supply lines, and to operate in an associated disconnect mode for disconnecting the energy source from the power supply lines.

EP 4 165 712 B1 proposes a device for protecting a battery, comprising a casing suitable for containing a set of electrical energy storage cells of the battery, characterised in that the casing comprises: - a casing body that extends around the cells and comprises a set of partition walls forming cavities, which are open at at least one end in order to each receive one of the cells, each cavity being delimited by a wall intended to come into contact with one of the cells, and - at least one network of channels running along the walls of the cavities, the channels being arranged in the partition walls and filled by a temperature control liquid, the network of channels containing the temperature control liquid having such dimensions that at least one predetermined volume of temperature control liquid runs along the wall of each cavity in order to be able to absorb a predetermined quantity of heat energy corresponding to a heat energy safety threshold.

EP 3 605 128 B1 deals with a battery and an electrical battery monitoring device are disclosed having a first group of sensing switches connected in series on a first monitoring circuit, the sensing switches, a second group of electrical sensing switches connected in series on a second monitoring circuit, an input unit to provide an input to the first and second monitoring circuits, a monitoring unit to receive an output from the first and second monitoring circuits, wherein the monitoring unit receives at least two outputs from two measuring points of the first monitoring circuit, the two measuring points being separated by at least one sensing switch. The location of a defective battery cell may be early detected and precisely located by the monitoring of the battery cells in rows and columns.

Avijit Karmakar et al, "State-of-Charge Implications of Thermal Runaway in Li-ion Cells and Modules," 2024 J. Electrochem. Soc. 171 010529 (DOI 10.1149/1945-7111/ad1ecc) state that thermal safety of lithium-ion (Li-ion) batteries for electric vehicles continue to remain a major concern. A comprehensive understanding of the thermal runaway (TR) mechanisms in Li-ion cells and modules due to intrinsic factors such as state-of-charge (SOC) and cell-to-cell arrangement under abuse scenarios such as external heating is critical toward the development of advanced battery thermal management systems. This study presents a hierarchical TR modelling framework to examine the TR behaviour of Li-ion cells at various SOCs and probe its implications on the thermal runaway propagation (TRP) in a battery module. We perform accelerating rate calorimetry (ARC) experiments with 3.25 Ah cylindrical Li-ion cells at different SOCs and demonstrate the strong SOC dependence of TR characteristics such as the onset temperature, maximum cell temperature, and self-heating rate. The thermo-kinetic parameters extracted from the ARC experiments are used to develop a TR model that captures the SOC-induced TR response in Li-ion cells. The mechanistic information from the cell-level model is used to examine the pathways for TRP in a battery module consisting of cells with uniform and imbalanced SOCs, thereby demonstrating the underlying role of SOC variability on the resulting TRP under abuse conditions.

M. Yen, A. Kossolapov and F. Colella, "Thermal Runaway Energy Release as a Function of the State of Charge," 2023 IEEE International Symposium on Product Compliance Engineering (ISPCE), Dallas, TX, USA, 2023, pp. 1-6, doi: 10.1109/ISPCE57441.2023.10158752, state that designing safe products powered by lithium batteries requires an understanding of how the battery pack will behave while undergoing thermal runaway. In their work, Fractional Thermal Runaway Calorimetry (FTRC) is used to estimate the energy release from cells at different states of charge when undergoing a thermal runaway.

Colella F. et al., "Energy Release Quantification for Li-lon Battery Failures," In Compliance, October 31, 2022 (https://incompliancemag.com/energy-release-quantification-for-li-ion-battery-failures/), present an experimental framework to characterize the energy released during thermal runaway events involving Li-ion cells and battery packs used in applications ranging from electric vehicles to consumer electronics and medical devices to aerospace applications. A brief introduction to lithium-ion batteries and battery thermal runaway is provided. The article then describes various methods for obtaining energy release in cells undergoing thermal runaway.

Systems and methods known from the prior art for detecting and reacting to technical failures for mitigating potentially harmful effects of in the event of thermal runaway reactions of energy storage devices may not meet conditions arising from increasing energetic capacity and density of the energy storage devices, in particular electrochemical batteries. In order to meet such conditions and satisfy technical safety specifications, known systems could bring certain issues regarding mitigation of harmful effects on the one hand, and maintaining operability of energy storage devices on the other hand. Especially the latter may compete with the operability of vehicles, especially aircrafts demanding solutions for dealing with technical failures without overly compromising operability, including flight range and safe landing requirements.

### Summary

It may thus be seen as an object to provide protective measures suitable for meeting conditions arising from increasing energetic capacity and density of energy storage devices. Furthermore, it can be seen as an object, to fulfil technical safety specifications for energy storage devices, in particular in the event of runaway reactions of electric chemical batteries, used for powering vehicles, such as aircrafts, without overly compromising their operability in the event of a technical failure. These objects are at least partly achieved by the subject-matter of the independent claims.

According to an aspect, a protection arrangement for protecting an energy storage device, such as an electrochemical battery in an apparatus, in particular a vehicle, such as an aircraft, in the event of a technical failure of at least one energy storage unit of the energy storage device, is provided, the protecting arrangement comprising a discharging circuit with a switching device configured to reduce an electrical charging level of the at least one energy storage unit by electrically closing the discharging circuit upon detection of the technical failure.

According to an aspect, an energy storage device, in particular an electrochemical battery for am apparatus, such as an aircraft, is provided, comprising a corresponding protection arrangement for protecting the energy storage device in the event of a technical failure of at least one energy storage unit of the energy storage device.

According to an aspect, an apparatus, in particular a vehicle, such as an aircraft, is provided, comprising a corresponding protection arrangement and/or a corresponding energy storage device.

For example, the switching device may be designated to switch at least one particular storage unit or a group of storage units which can be combined as a storage module. The storage unit can be a battery cell. Thereby, a charging level of the respective storage unit may be reduced, i.e., an electrical charge contained in the storage unit may be depleted, preferably to a degree where exothermic reactions can be inhibited at an early stage within the energy storage unit.

At least two operational modes of the discharging circuit may be applied. For example, in a first operational mode, the at least one energy storage unit may be discharged by way of precaution if a critical temperature level or any other indicator for a possible impending thermal runaway (TR) event is being detected as a sign for a technical failure. Alternatively, or additionally, in a further operational mode, the at least one energy source unit may be discharged upon detection of a TR event.

An automated and fast electrical discharge strategy for certain or all cells in a pack after the occurrence of a TR in one of the cells can be provided, as opposed to common battery safety strategies according to the prior art that are based on the avoidance of any heat impact on TR neighbouring cells to stop or avoid their heat up and therefore TR propagation. As the proposed electrical discharge may cause additional heat generation inside the cells, a further discharge can be stopped by electrical disconnection (battery main contactor or additional contactors and fuses inside a pack). For battery aircraft qualification, a full TR of fully charged cells is a test request. Consequently, such a full TR cannot be avoided by design. Nevertheless, any full TR would take a certain amount of time to impact all cells of a battery pack. During a respective residual time span, a high-power discharge or even short circuit can be applied to certain or all of the remaining cells, lowering their state of charge.

A TR potential or even behaviour of the discharged cells is much less critical as of that of any fully charged cells. The gas generation rate and overall gas volume as well as particle emission can be significantly reduced. The discharge strategy in case of a TR can furthermore reduce a heat and pressure impact on battery housings and supports the functionality of current venting strategies based on filters, manifolds and exhaust pipes. In addition, there is a direct impact on system weight because of reduced emission and enlarged chemical reaction time during cell decomposition. The proposed discharge strategy reduces risk for blocking of the venting system and the risk for vent gas ignition in front of the venting opening.

The proposed solution thus provides an alternative in reducing or shifting efforts for mitigating potentially harmful effects of failures in energy storage devices of all kinds of apparatuses, in particular vehicles, including but not limited to aircraft. This may especially apply to energy storage devices for aircrafts comprising electrochemical batteries with high energetic capacity and density, as they may be used for aircraft propulsion purposes and/or as APUs, possibly in connection with fuel cell systems. The proposed solution paves way for highly efficient, simple, and lightweight protection measures for energy storage devices which are failure safe in that a chain of events leading up to and/or following after technical failures can be interrupted, especially when dealing with potentially occurring or impending TR events.

Advantages of the proposed solution can be particularly helpful when linked to big Li-lon cell battery packs or battery modules, for example, as used in aircraft applications for Urban Air Mobility, Helicopter Hybridisation or in electrified aircraft, where the battery pack must be able to sustain a full thermal runaway in a safe manner without impact on the safe operation of the air vehicle. This is currently required according to certain European and U.S. regulations.

Further developments can be derived from the dependent claims and from the following description. Features described with reference to devices and arrangements may be implemented as method steps, or vice versa. Therefore, the description provided in the context of the protection arrangement, energy storage device and/or apparatus applies in an analogous manner also to respective methods. In particular, the functions of the protection arrangement, energy storage device, and/or apparatus and of their or its, respectively, components may be implemented as method steps of respective methods and the method steps may be implemented as functions of the protection arrangement, energy storage device, and/or vehicle.

According to an embodiment of a protection arrangement, the at least one switching device comprises at least one electromechanical switching element configured to electrically close the discharging circuit upon detection of the technical failure. The electromechanical switching element may be bistable and open and closed state can be at least stable in a closed state when closing the discharging circuit to allow for securely and reliably discharging the at least one energy source unit. Thereby, any unwanted consequences of technical failures, in particular exothermic reactions can be prevented or at least inhibited at a preferably early stage within the energy storage unit.

According to an embodiment of a protection arrangement, the at least one switching device comprises at least one analogue switching element configured to electrically close the discharging circuit. The at least one analogue switching element may be provided in the form of a diode, thyristor, MOSFET and/or any other suitable solid-state semiconductor device which may serve a switchable semiconductor. Such an analogue switching element may on the one hand provide a direct way to electronically control the switching device, and on the other hand can be relatively lightweight in comparison to electromechanical solutions. Analogue switching elements may therefore further help in efficiently providing ways to prevent or at least inhibit unwanted consequences of technical failures, in particular exothermic reactions at a preferably early stage within the energy storage unit.

According to an embodiment of a protection arrangement, the at least one switching device comprises at least one analogue switching element is configured to electrically close the discharging circuit upon detection of the technical failure within a latency time span at least extending from an actuation time until an engagement time of the at least one electromechanical switching element after detecting the technical failure. The protection arrangement, in particular, the switching device, may comprise a respective actuation assembly configured to actuate the at least one electromechanical switching element and/or the at least one analogue switching element. Thereby, the analogue switching element may bridge a time gap caused by a possible switching delay of an electromechanical switching element. The application of analogue switching elements may thereby additionally help in efficiently providing ways to prevent or at least inhibit unwanted consequences of technical failures, in particular exothermic reactions at a preferably early stage within the energy storage unit.

According to an embodiment of a protection arrangement, the protection arrangement further comprises at least one triggering unit configured to trigger actuation of the switching device upon detection of the technical failure. The at least one triggering unit may be configured to control multiple switching devices which can be associated to respective energy storage units of the energy storage device. Thereby, a comprehensive approach to prevent or at least inhibit unwanted consequences of technical failures, in particular exothermic reactions at a preferably early stage within the entire energy storage device can be provided.

According to an embodiment of a protection arrangement, the protection arrangement further comprises at least one detection assembly configured to detect the technical failure. The detection assembly may comprise sensor elements in any number and form required to acquire measurement values representing at least one functional parameter indicative of the functional state of the at least one energy storage unit. Thereby, the detection assembly can further help in providing a comprehensive approach to prevent or at least inhibit unwanted consequences of technical failures, in particular exothermic reactions at a preferably early stage within the entire energy storage device.

According to an embodiment of a protection arrangement, the detection assembly comprises at least one auxiliary and/or thermal switch configured to detect a temperature value representing an operating temperature of the at least one energy storage unit. A digital and/or analogue thermal switch can be provided. The thermal switch may serve as and/or operate the switching device. The switching device may be operated upon exceeding a predefined temperature threshold, for example 150, 180, or 200°C, or alike. The temperature threshold may be chosen such that the thermal runaway TR onset temperature may not be reached. Alternatively, or additionally, a pyro switch may be used as a thermal switch is set over semiconductor, or alike. The pyro switch may be electrically operated. Thereby, the relatively simple and reliable way for preventing or at least inhibiting unwanted consequences of technical failures, in particular exothermic reactions at a preferably early stage within the entire energy storage device, can be provided.

According to an embodiment of a protection arrangement, the protection arrangement further comprises at least one interface module configured to interface an energy management system of the energy storage device. The energy management system may be provided in the form of a battery management system. The battery management system may be configured to provide and/or process data allowing to assess whether the technical failure is at hand. A respective method for operating the protection arrangement based on the detection of the technical failure may be employed. In such an incorporation of the energy management system and/or and implementation of a respective method making use of the energy management system can further help in providing a comprehensive approach to prevent or at least inhibit unwanted consequences of technical failures, in particular exothermic reactions at a preferably early stage within the entire energy storage device.

According to an embodiment of a protection arrangement, the discharge circuit comprises at least one discharge resistor and/or discharge load configured to convert electrical energy to thermal and/or mechanical energy. The discharge resistor may be provided in the form of a load resistance configured to convert electrical energy to thermal energy. Discharge load can be provided in the form of an electrical load, including electrical drives, or alike, in particular configured to convert electrical energy to mechanical energy. For example, the discharge load may be an electric motor driving a fan and/or pumping device configured to provide a cooling agent and/or medium to the energy storage device, in particular to the energy storage unit where a technical failure is detected. Thereby, any discharge electrical energy can be efficiently used to prevent or at least inhibit unwanted consequences of technical failures, in particular exothermic reactions within the entire energy storage device.

According to an embodiment of a protection arrangement, the discharge resistor and/or discharge load is arranged inside and/or outside of a housing of the at least one energy storage unit. The discharge resistor and/or discharge load can thereby help to contain and/or dissipate the electrical energy, respectively, with respect to the at least one energy storage unit and its surroundings as desired or required. Thereby, further options for preventing or at least inhibiting unwanted consequences of the technical failure can be provided.

According to an embodiment of a protection arrangement, the discharge resistor and/or discharge load is arranged inside and/or outside of an enclosure of the energy storage device. The discharge resistor and/or discharge load can thereby help to contain and/or dissipate the electrical energy, respectively, with respect to the energy storage device and its surroundings as desired or required. Thereby, further options for preventing or at least inhibiting unwanted consequences of the technical failure can be provided.

According to an embodiment of a protection arrangement, the protection arrangement further comprises a heat exchange unit configured to transfer heat from the discharge circuit to a cooling medium. The cooling medium may help to safely transport any discharged energy away from the energy storage unit and/or energy storage device. This may further help in preventing or at least inhibiting unwanted consequences of technical failures, in particular exothermic reactions, at any stage.

According to an embodiment of a protection arrangement, a number of storage units are each provided with the switching device configured to reduce an electrical charging level of the respective energy storage unit by electrically closing the discharging circuit upon detection of the technical failure. For example, any desired number of storage units of the energy storage device can be provided with a respective switching device to individually discharged upon detection of the technical failure. This further helps in providing a comprehensive, yet flexible and targeted approach to prevent or at least inhibit unwanted consequences of technical failures, in particular exothermic reactions within the entire energy storage device.

### Brief Description of the Drawings

The subject matter will hereinafter be described in conjunction with the following drawing figures, wherein like numerals denote like elements, and wherein:
Fig. 1 is a schematic illustration of a vehicle in the form of an aircraft comprising an energy storage device provided with a protection arrangement.
Fig. 2 is a schematic cross-sectional view of the vehicle shown in Fig. 1 along the cross-sectional line A-A depicted therein.
Fig. 3 is a schematic illustration of an embodiment of an energy storage device provided with the protection arrangement comprising a basic discharging circuit.
Fig. 4 is a schematic illustration of a further embodiment of an energy storage device provided with the protection arrangement.
Fig. 5 is a schematic illustration of an embodiment of a protection arrangement.
Fig. 6 is a schematic illustration of an embodiment of an energy storage device in the form of a battery system provided with the protection arrangement.
Fig. 7 is a schematic illustration of steps of a method for operating the protection arrangement

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

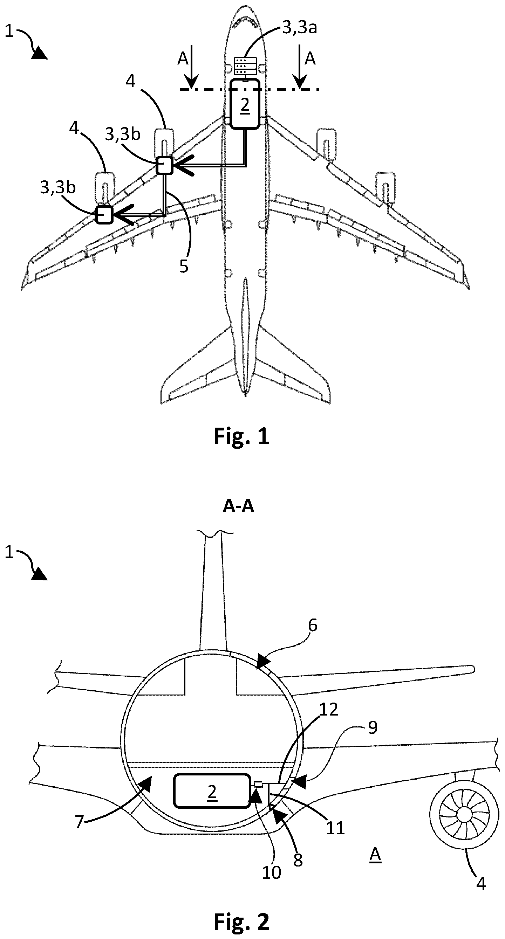

Fig. 1 shows a schematic illustration of an apparatus 1, for example, a vehicle in the form of an aircraft, comprising an energy storage device 2 in the form of an electrochemical battery. The energy storage device 2 may supply a number of energy consumers 3 of the apparatus 1, such as electronic equipment 3a and/or electric motors 3b for driving propulsion devices 4, e.g., propellers, wheels, or alike, for propelling the apparatus 1. Energy, in particular electric power, can be provided from the energy storage device 2 to the energy consumers 3 via the transmission lines 5.

Fig. 2 shows a schematic cross-sectional view of the vehicle 1 shown in Fig. 1 along the cross-sectional line A-A depicted therein. Here it becomes apparent that the apparatus 1 comprises a hull 6 as part of its body, e.g., in the form of the fuselage, surrounding an interior space 7 of the vehicle 1 accommodating the energy storage device 2. The hull 6 is provided with an inlet opening 8 and an outlet opening 9 from and to, respectively, ambient surroundings A of the vehicle 1.

A protection arrangement 10 is provided to the vehicle 1 and can be regarded as being connected to and/or integrated into the energy storage device 2. The protection arrangement 10 can have an inlet duct 11 connecting to the inlet opening 8 and an outlet duct 11 connecting to the outlet opening 9. A cooling agent and/or cooling medium C, such as ambient air from the ambient surroundings A may be taken in through the inlet opening 8 in order to be provided to the protection arrangement 10 through the inlet duct 11, while exhausts E from the energy storage device 2 and/or protection arrangement 10 may be discharged via the outlet duct 12 through the outlet opening 9 to the ambient surroundings A.

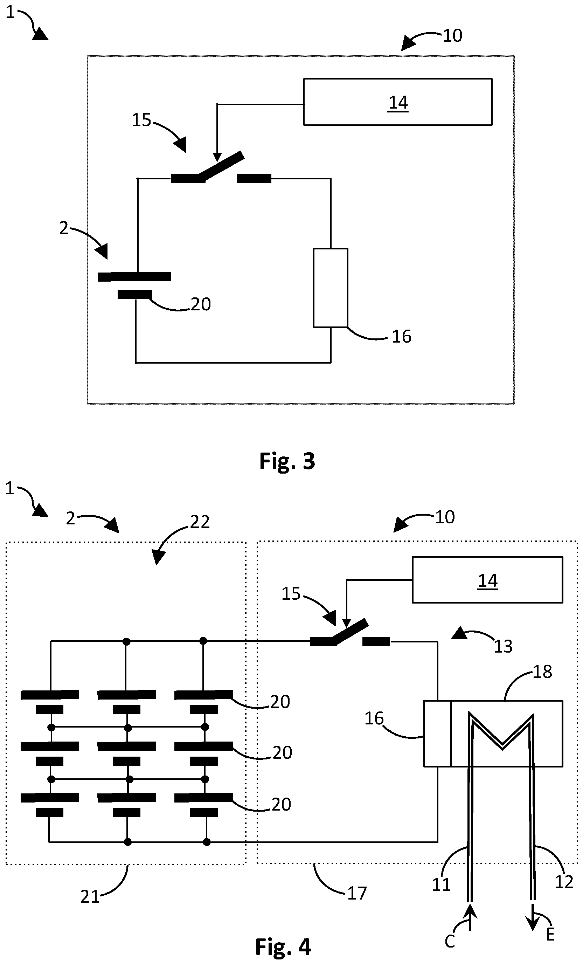

Fig. 3 shows a schematic illustration of an embodiment of an energy storage device 2 provided with the protection arrangement 10 comprising a basic discharging circuit 13 and a control module 14 for controlling the discharging circuit 13. The discharging circuit comprises a switching device 15 and may further comprise at least one discharge resistor 16. Upon detection of a technical failure of the energy storage device 2, for example, of an energy storage unit 20 thereof, the control module 14 can close the switching device 15 to lead electric energy stored in the at least one storage unit 20 to the discharge resistor 16 for dissipation, for example, by converting the electrical energy to thermal energy.

Fig. 4 shows a schematic illustration of a further embodiment of an energy storage device 2 provided with the protection arrangement 10. The energy storage device may comprise a number of energy storage units 20, such as a number of battery cells. The energy storage units 20 can be received in an enclosure 21 of the energy storage device 2 enclosing an interior 22 thereof. The protection arrangement 10 may be provided with a housing 17 and an energy heat exchange unit 18. A cooling medium C can be led via the inlet duct 11 into the housing 17 to the heat exchange unit 18 to pick up thermal energy generated by the discharge resistor 16 in order to lead the thermal energy as exhausts E from the heat exchange unit 18 away from the protection arrangement 10 through the outlet duct 12, for example, to be discharged from the apparatus 1.

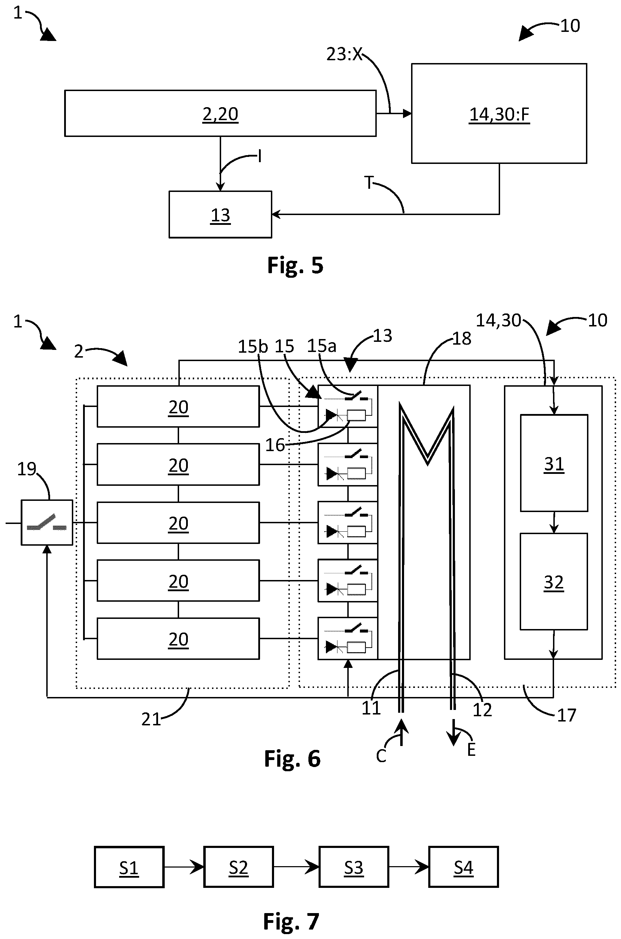

Fig. 5 shows a schematic illustration of an embodiment of a protection arrangement 10 which may involve a battery management system 30. A sensor element 23 may be provided that can pick up a sensor signal X, such as temperature value, voltage value, and/or current value, which may indicate a functional state of the energy storage device 2 and/or energy storage unit 20.

Based on the functional state, the control module 14 and/or battery management system 30 may determine whether a technical failure F is at hand. If that is the case, the control module 14 and/or battery management system 30 may stand a control signal T to the discharging circuit 13 for triggering a discharge of this charge current I from the energy storage device 2 and/or energy storage unit 20 by means of the discharging circuit 13.

Fig. 6 shows a schematic illustration of an embodiment of an energy storage device 2 in the form of a battery system provided with the protection arrangement 10. The energy storage device 2 comprises a number of energy storage units 20 and an enclosure 21. Each of the energy storage units 20 may be provided with a discharging circuit 13 and the corresponding switching device 15.

Each of the switching devices 15 may comprise an electric mechanical switching element 15a and/or an analogue switching element 15b. In addition, the protective switch or main switch 19 for disconnecting and/or connecting the entire energy storage device 2 and/or individual energy storage units 20 may be provided. The switching devices 15 and the main switch 19 may be controlled by means of the control module 14 which can be provided as, connected with, and/or integrated into the battery management system 30.

The control module 14 and/or the battery management system 30 may comprise a detection assembly 31 and a triggering unit 32. The detection assembly 31 can comprise any sensor elements 23 necessary to pick up sensor signals X. The triggering unit 32 may decide upon actuating the switching devices 15 based on the picked-up sensor signals X and their analysis.

Fig. 7 shows a schematic illustration of steps S of a method for operating the protection arrangement. In a first step S1, the detection assembly 31 may acquire sensor signals X, which may represent currents, voltage, temperature, gas compositions, or alike. In a second step S2, respective calculations may be performed, such as current, voltage and social temperature slopes, state of charges (SoC), or alike, relating to the energy storage units 20. In a third step as 3, a critical state may be detected which may relate to a TR of an energy storage unit 20, such as a battery cell having critical temperature or at least critical temperature rise. In a fourth step S4, a decision matrix may be applied which may involve switching off battery operation by means of the main switch 19, discharge all non-TR modules by means of the switching devices 15, exclude energy storage units 20 from discharge where self-heating during discharge would cause a further TR, as well as the simple discharge of any of the antisocialist 20 through the respective discharge circuit 13.

The decision matrix may take into account that a first cell on TR cannot be saved. Activation of a respective discharging circuit 13 can lower the TR impact and reduces the risk of propagation by reducing temperature, reducing ejecta (particles and gas), reducing of overall TR energy release, and/or avoiding of cell housing rupture (side rupture). Depending on the energy storage device 2, e.g., battery system design, it can be beneficial or counterproductive to discharge a module which is already on TR. Electrically stored energy can be released on a different location (energy transfer from cell to somewhere else).

The subject matter disclosed herein can be implemented in or with software in combination with hardware and/or firmware. For example, the subject matter described herein can be implemented in or with software executed by a processor or processing unit. In one example implementation, the subject matter described herein can be implemented using a computer readable medium having stored thereon computer executable instructions that when executed by a processor of a computer control the computer to perform steps. Example computer readable mediums suitable for implementing the subject matter described herein include non-transitory devices, such as disk memory devices, chip memory devices, programmable logic devices, and application specific integrated circuits. In addition, a computer readable medium that implements the subject matter described herein can be located on a single device or computing platform or can be distributed across multiple devices or computing platforms.

While at least one example embodiment of the invention(s) is disclosed herein, it should be understood that modifications, substitutions and alternatives may be apparent to one of ordinary skill in the art and can be made without departing from the scope of this disclosure. This disclosure is intended to cover any adaptations or variations of the example embodiment(s). In addition, in this disclosure, the terms "comprise" or "comprising" do not exclude other elements or steps, the terms "a", "an" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### List of Reference Signs

| | | | |
|---|---|---|---|
| 1 | apparatus / vehicle / aircraft | 22 | interior |
| 2 | energy storage device | 23 | sensor element |
| 3 | energy consumers | | |
| 3a | electronic equipment | 30 | battery management system |
| 3b | electric motor | 31 | detection assembly |
| 4 | propulsion device | 32 | triggering unit |
| 5 | transmission line | | |
| 6 | hull | A | ambient surroundings |
| 7 | interior space | I | discharge current |
| 8 | inlet opening | C | cooling medium/agent |
| 9 | outlet opening | E | exhausts |
| | | F | technical failure |
| 10 | protection arrangement | S | step |
| 11 | inlet duct | T | control signal |
| 12 | outlet duct | X | sensor signal |
| 13 | discharging circuit | | |
| 14 | control module | S1 | data acquisition |
| 15 | switching device | S2 | calculations |
| 15a | electromechanical switching element | S3 | detection of a critical state |
| | | S4 | decision matrix |
| 15b | analogue switching element | | |
| 16 | discharge resistor | | |
| 17 | housing | | |
| 18 | heat exchange unit | | |
| 19 | protective/main switch | | |
| 20 | energy storage unit | | |
| 21 | enclosure | | |

## Claims

1. Protection arrangement (10) for protecting an energy storage device (2), such as an electrochemical battery in an apparatus (1), in particular a vehicle, such as an aircraft, in the event of a technical failure (F) of at least one energy storage unit (20) of the energy storage device (2), the protecting arrangement (10) comprising a discharging circuit (13) with a switching device (15) configured to reduce an electrical charging level of the at least one energy storage unit (20) by electrically closing the discharging circuit (13) upon detection of the technical failure (F).

2. Protection arrangement (10) according to claim 1, wherein the at least one switching device (15) comprises at least one electromechanical switching element (15b) configured to electrically close the discharging circuit (13) upon detection of the technical failure (F).

3. Protection arrangement (10) according to claim 1 or 2, wherein the at least one switching device (15) comprises at least one analogue switching element (15b) configured to electrically close the discharging circuit (13).

4. Protection arrangement (10) according to claim 2 and 3, wherein the at least one switching device (15) comprises at least one analogue switching element (15b) is configured to electrically close the discharging circuit (13) upon detection of the technical failure (F) within a latency time span at least extending from an actuation time until an engagement time of the at least one electromechanical switching element (15b) after detecting the technical failure (F).

5. Protection arrangement (10) according to according to at least one of claims 1 to 4, further comprising at least one triggering unit (32) configured to trigger actuation of the switching device (15) upon detection of the technical failure (F).

6. Protection arrangement (10) according to according to at least one of claims 1 to 5, further comprising at least one detection assembly (31) configured to detect the technical failure (F).

7. Protection arrangement (10) according to claims 6, wherein the detection assembly (31) comprises at least one auxiliary and/or thermal switch configured to detect a temperature value representing an operating temperature of the at least one energy storage unit (20).

8. Protection arrangement (10) according to at least one of claims 1 to 7, further comprising at least one interface module configured to interface an energy management system (30) of the energy storage device (20).

9. Protection arrangement (10) according to at least one of claims 1 to 8, wherein the discharge circuit comprises at least one discharge resistor (16) and/or discharge load configured to convert electrical energy to thermal and/or mechanical energy.

10. Protection arrangement (10) according to claim 9, wherein the discharge resistor (16) and/or discharge load is arranged inside and/or outside of a housing () of the at least one energy storage unit (20).

11. Protection arrangement (10) according to claim 9 or 10, wherein the discharge resistor (16) and/or discharge load is arranged inside and/or outside of an enclosure (21) of the energy storage device (2).

12. Protection arrangement (10) according to at least one of claims 1 to 11, further comprising a heat exchange unit (18) configured to transfer heat from the discharging circuit (13) to a cooling medium (C).

13. Protection arrangement (10) according to at least one of claims 1 to 12, wherein a number of energy storage units (20) are each provided with the switching device (15) configured to reduce an electrical charging level of the respective energy storage unit (20) by electrically closing the discharging circuit (13) upon detection of the technical failure (F).

14. Energy storage device (2), in particular an electrochemical battery for an apparatus (1), such as an aircraft, comprising a protection arrangement (10) according to at least one of claims 1 to 13 for protecting the energy storage device (2) in the event of a technical failure (F) of at least one energy storage unit (20) of the energy storage device (2).

15. Apparatus (1), in particular a vehicle, such as an aircraft, comprising a protection arrangement (10) according to at least one of claims 1 to 13 and/or an energy storage device (2) according to claim 14.
